# EUROPÄISCHE PATENTSCHRIFT

(11) **EP 2 272 926 B1**
(45) Veröffentlichungstag und Bekanntmachung des Hinweises auf die Patenterteilung: **30.04.2014**
(21) Anmeldenummer: 10006862.6
(22) Anmeldetag: 02.07.2010
(51) Int. Cl.: C09D 11/00

(54) **Tinte und deren Verwendung**
Ink and use thereof
Encre et son utilisation

(30) Priorität: 10.07.2009 DE 102009032615
(43) Veröffentlichungstag der Anmeldung: 12.01.2011
(73) Patentinhaber: J.S. Staedtler GmbH & Co. KG, 90427 Nürnberg (DE)
(72) Erfinder: Bührke, Kirsten, 91413 Neustadt (DE)

(56) Entgegenhaltungen:
- EP-A1- 1 522 561
- EP-A1- 1 775 326
- WO-A1-03/010249
- WO-A1-2006/061995
- WO-A1-2007/026366
- WO-A1-2007/070689
- US-A- 5 686 519
- US-A1- 2004 191 641

## Beschreibung

Die Erfindung betrifft die Verwendung einer Tinte als Schreibmittel für Schreibgeräte nach dem Oberbegriff des Hauptanspruchs, wobei die Tinte eine permanente Tinte auf Lösungsmittelbasis ist, welche auch für sehr schwierig benetzbare Oberflächen, wie z.B. Teflon-, neueste Nano-, Easy-Clean- und /oder Silikon-Oberflächen bestens geeignet ist.

Aus der US 5,686,519 ist eine Lösemitteltinte für Schreibgeräte bekannt, welche Fluortensid oder Silikontensid beinhaltet, wodurch das Benetzungsverhalten der Tinten auf glatten und nichtsaugenden Oberflächen als ausreichend eingestuft werden kann.

Nachteilig ist es bei einer derartigen Tinte, dass diese neueste Easy-Clean-Oberflächen, Silikon und Teflon nicht benetzt.

Dieser Nachteil, sowohl beim Einsatz von Tensiden auf Fluor- oder Silikonbasis, lässt sich auch nicht durch einfache Erhöhung der jeweiligen Anteile/Konzentrationen in der Tinte verbessern.

Weiter sind neben den physikalisch trocknenden Systemen in Schreibgeräten UVhärtbare Tintensysteme aus dem Ink-Jet-Bereich bekannt, welche Tenside und Tensidkombinationen aufweisen.

Nachteilig ist es bei derartigen Systemen, dass diese nur durch Zufuhr von Energie spezieller Energiequellen aushärten und zudem für Schreibgeräte inakzeptable oder zumindest kritische, stark reizende Monomere aufweisen.

Es hat sich jedoch gezeigt, dass diese Spezialtinten für spezielle automatische Drucksysteme auf kritischen Oberflächen wie Teflon- oder Easy-Clean-Oberflächen keine befriedigenden Druckbilder liefern.

Derartige Ink-Jet-Tinten sind aus der WO 2007/070689 A1**,** WO 2007/026366 A1**,** EP 1 775 326 A1**,** WO 2006/061995 A1**,** US 2004/191641 A1**,** WO 03/010249 A1 und EP 1 522 561 A1 bekannt.

Unter den genannten Easy-Clean-Oberflächen werden Beschichtungen verstanden, die die Oberflächen derart modifizieren, dass selbst die feinsten Schmutz- und Fettpartikel keinen Halt finden. Dies ist ein Hinweis auf die ausgesprochen schwere Benetzbarkeit derartiger Flächen.

Der Erfindung liegt daher die **Aufgabe** zugrunde, eine Tinte als Schreibmittel für Schreibgeräte zu schaffen, die eingangs genannten Nachteile nicht aufweist und verbesserte Benetzungseigenschaft kritischer Oberflächen, wie beispielsweise Teflon und neueste Easy-Clean-Oberflächen von Brillengläsern ausweist.

Weiter ist es Aufgabe, eine Tinte zu schaffen, die auch sonstige kritische Untergründe, wie Laminierfolien, Etikettenträgerpapier und Silikon benetzt.

Eine **Lösung der Aufgabe** wurde dadurch erreicht, dass die erfindungsgemäß verwendete Tinte, mindestens ein Lösungsmittel, mindestens ein Farbmittel und eine Kombination bzw. Mischung aus mindestens zwei Tensiden aufweist, wobei die Mischung aus mindestens zwei Tensiden aus mindestens einem Fluortensid und mindestens einem Silikontensid besteht. Es hat sich in überraschender Weise gezeigt, dass sich ein Synergismus zwischen den beiden Tensiden ergibt, da die Wirkung der Tensidkombination wesentlich größer als die Wirkung der Einzeltenside ist und damit bis dato nicht benetzbare Oberflächen sehr gut benetzt werden.

Als Beispiele für derartige Oberflächen seinen die neuesten Easy-Clean-Oberflächen von Brillengläser, Teflon, Dichtungen und Schläuche aus Silikon, Laminier- und Etikettenfolien genannt.

Das mindestens eine Fluortensid liegt als ein fluoraliphatisches Polymer und das mindestens eine Silikontensid als ein organisch modifiziertes Polysiloxan vor.

Die Mischung aus dem mindestens einem Fluortensid und mindestens einem Silikontensid sollte einen Gehalt an 12 Gew. % nicht überschreitet, wobei das mindestens eine Silikontensid in der Tinte in einer Menge von 0,05 - 6,0 Gew. % vorliegt und wobei das mindestens eine Fluortensid in der Tinte in einer Menge von 0,05 - 6,0 Gew. % vorliegt.

Es hat sich in überraschender Weise gezeigt, dass bereits Mengen von 0,05 Gew. % an Fluortensid und 0,05 Gew. % an Silikontensid eine gute Wirkung zeigen, um die gestellte Aufgabe zu lösen.

Der bevorzugte Gehalt von dem mindestens einen Fluortensid in der Tinte liegt bei 0,1 bis 5 Gew. %. Ebenso liegt der bevorzugte Gehalt an dem mindestens einen Silikontensid bei 0,1 bis 5 Gew. %

Neben den in Kombination vorliegenden Tensiden auf Basis von Fluor oder Silikon, können weitere Tenside als Additiv zugesetzt werden. Beispiele hierfür sind Ethindiolderivate, Ethoxylierte Alkohole oder modifizierte Sulfosuccinate

**Bindemittel (BM)** finden sich häufig in permanenten Tinten wieder. Sie dienen dazu, dass zum einen die Haftfestigkeit der getrockneten Abstriche auf nichtsaugenden Untergründen verbessert wird und zum anderen zur Verlackung der basischen Farbstoffe.

Beispielhaft seien Phenolformaldehydharz, ölmodifiziertes Alkydharz, Polyvinylbutyral, Fumarsäure-Kolophonium-Addukte und/oder modifiziertes Acetophenonformaldehydharz genannt.

Die Bindemittel sind in den Lösungsmitteln löslich.

Ist in der Tinte kein Bindemittel enthalten, so verringert sich die Haftung des getrockneten Anstrichs. Durch Zugabe von Bindemitteln zur Tintenzusammensetzung wird die Benetzungsfähigkeit nicht negativ beeinflusst.

Bei den eingesetzten **Farbmitteln** (FM) handelt es sich um Farbstoffe oder Pigmente. Die Farbstoffe sind bevorzugt im Lösungsmittel lösbar. Besonders geeignet sind Solvent- oder basische Farbstoffe, wobei basische Farbstoffe mit einem sauren Harz beim Einmischen in die Tinte verlackt werden.

Als Beispiele für Farbstoffe seien Basic Blue 7, Solvent Black 27, Solvent Red 125, Solvent Brown 52 und Basic Red 1:1 genannt. Der Auswahl an Farbstoffen ist kaum eine Grenze gesetzt, sofern diese das Kriterium der Lösbarkeit im Lösungsmittel erfüllen.

Im Bereich der Pigmente kann als Beispiel Pigment Blue 15:3 oder Pigment Black 7 eingesetzt werden. Diese und andere Pigmente liegen zum Teil als fertige Pigmentpräparationen auf Polyvinylbutyralbasis vor.

Als organische **Lösungsmittel (LM)** seien beispielhaft neben den in den

Rezepturbeispielen genannten Lösungsmitteln i-Propanol, n-Butanol und/oder MEK genannt.

Als weitere Zusätze oder Zusatzstoffe können der Tinte Bindemittel, Entschäumer, Schmiermittel, Wachse, Öle, weitere Tenside und/oder sonstige Additive zugesetzt werden.

Nachfolgend soll die Erfindung anhand einer Rahmenrezeptur und einiger Rezepturbeispiele erläutert werden.

### Rahmenbeispiel für erfindungsgemäß verwendete Tinten

60 - 90 Gew.% Lösungsmittel (LM)
0 - 20,0 Gew.% Bindemittel (BM)
0,05 - 6,0 Gew.% Fluortenside (T1)
0,05 - 6,0 Gew.% Silikontensid (T2)
1,0 - 35,0 Gew.% Farbmittel (FM)
0 - 10 Gew.% weitere Zusätze (Z)

### Rezepturbeispiel 1: schwarze Tinte für Schreibgeräte

| | |
|---|---|
| n-Propanol (LM) | 14,0 Gew.% |
| Aceton (LM) | 21,0 Gew.% |
| Ethoxypropanol (LM) | 36,0 Gew.% |
| Butyldiglycol (LM) | 3,0 Gew.% |
| Solvent Black 27 (FM) | 17,5 Gew.% |
| Phenolformaldehydharz (BM) | 4,0 Gew.% |
| Fluortensid (T1) | 2,5 Gew.% |
| Polyethermodifiziertes Dimethylpoysiloxan (T2) | 2,0 Gew.% |

### Rezepturbeispiel 2: schwarze Tinte für Schreibgeräte

| | |
|---|---|
| Ethanol (LM) | 11,0 Gew.% |
| Methoxypropanol (LM) | 59,0 Gew.% |
| Gamma-Butyrolacton (LM) | 4,5 Gew.% |
| Solvent Black 27 (FM) | 15,5 Gew.% |
| Modifiziertes Acetophenonformaldehydharz (BM) | 5,5 Gew.% |
| Fluortensid (T1) | 3,0 Gew.% |
| Polyethermodifiziertes Dimethylpoysiloxan (T2) | 1,5 Gew.% |

### Rezepturbeispiel 3: rote Tinte für Schreibgeräte

| | |
|---|---|
| Ethanol (LM) | 38,0 Gew.% |
| Methoxypropanol (LM) | 39,0 Gew.% |
| Gamma-Butyrolactan (LM) | 4,0 Gew.% |
| Solvent Red 125 (FM) | 11,5 Gew.% |
| Modifiziertes Acetophenonformaldehydharz (BM) | 3,0 Gew.% |
| Fluortensid (T1) | 2,5 Gew.% |
| Polyethermodifiziertes Dimethylpoysiloxan (T2) | 2,0 Gew.% |

### Rezepturbeispiel 4: Pigmenttinte für Schreibgeräte

| | |
|---|---|
| n-Propanol (LM) | 85,0 Gew.% |
| Pigment Blue 15:3 (FM) | 5,5 Gew.% |
| Polyvinylbutyral (BM) | 4,5 Gew.% |
| Fluoraliphatisches Polymer (T1) | 2,0 Gew.% |
| Organisch modifiziertes Polysiloxan (T2) | 3,0 Gew.% |

Verwendung findet die Tinte als Schreibmittel für Schreibgeräte für/auf nicht saugenden Untergründen, wobei die nichtsaugenden Untergründe beispielsweise neueste Easy-Clean-Oberflächen, Teflon, Dichtungen und Schläuche aus Silikon, Laminier- und Etikettenfolien sind.

## Patentansprüche

1. **Verwendung einer Tinte** als Schreibmittel für Schreibgeräte für/auf nicht saugenden Untergründen, wobei die nichtsaugenden Untergründe neueste Easy-Clean-Oberflächen, Teflon, Dichtungen und Schläuche aus Silikon, Laminier- und Etikettenfolien sind, wobei die Tinte mindestens ein organisches Lösungsmittel, mindestens ein Farbmittel und eine Mischung mindestens zweier Tenside sowie ggf. weitere Zusatzstoffe aufweist,
**dadurch gekennzeichnet,**
**dass** die Mischung aus mindestens zwei Tensiden mindestens ein Fluortensid und mindestens ein Silikontensid aufweist,
**dass** die Mischung aus dem mindestens einem Fluortensid und mindestens einem Silikontensid einen Gehalt an 12 Gew. % nicht überschreitet,
**dass** das mindestens eine Silikontensid in der Tinte in einer Menge von 0,05 - 6,0 Gew. % vorliegt,
**dass** das mindestens eine Fluortensid in der Tinte in einer Menge von 0,05 - 6,0 Gew. % vorliegt
**dass** das mindestens eine organische Lösungsmittel in einer Menge von 60 - 90 Gew. % vorliegt
**und dass** das mindestens eine Farbmittel in einer Menge von 4,0 - 35,0 Gew.% vorliegt.

2. **Verwendung einer Tinte** nach Anspruch 1,
**dadurch gekennzeichnet,**
**dass** die Tinte als Zusatzstoff Bindemittel, Entschäumer, Schmiermittel, Öle, Wachse, weitere Tenside und/oder sonstige Additive aufweist.

## Claims

1. Use of an ink as writing medium for writing instruments for/on non-absorbent substrates, wherein the non-absorbent substrates are the most recent Easy-Clean surfaces, Teflon, seals and hoses of silicon, laminating films and label films, wherein the ink comprises at least one organic solvent, at least one colorant and a mixture of at least two surfactants as well as optionally further additives,
**characterised in that**
the mixture of at least two surfactants comprises at least one fluoro-surfactant and at least one silicon-surfactant,
the mixture of the at least one fluoro-surfactant and at least one silicon-surfactant does not exceed a content of 12 weight %,
the at least one silicon-surfactant is present in the ink in an amount of 0.05 to 6.0 weight %,
the at least one fluoro-surfactant is present in the ink in an amount of 0.05 to 6.0 weight %, the at least one organic solvent is present in an amount of 60 to 90 weight % and
the at least one colorant is present in an amount of 4.0 to 35.0 weight %.

2. Use of an ink according to claim 1, **characterised in that** the ink comprises, as additive, binders, anti-foaming agents, lubricants, oils, waxes, further surfactants and/or other additives.

## Revendications

1. Utilisation d'une encre en tant que moyen de traçage destiné à des instruments d'écriture pour/sur des substrats non absorbants, lesdits substrats non absorbants se présentant comme des surfaces à nettoyage facile, du Téflon, des joints d'étanchement et des tuyaux souples en silicone, des feuils contrecollés et des films d'étiquetage de dernière génération, l'encre renfermant au moins un solvant organique, au moins un agent de coloration et un mélange d'au moins deux tensioactifs, ainsi que d'autres adjuvants, le cas échéant,
**caractérisée par le fait**
**que** le mélange d'au moins deux tensioactifs comprend au moins un tensioactif fluoré et au moins un tensioactif siliconé,
**que** ledit mélange, constitué du tensioactif fluoré à présence minimale et du tensioactif siliconé à présence minimale, n'excède pas une teneur de 12 % en poids,
**que** ledit tensioactif siliconé prévu au minimum est présent, dans l'encre, en une quantité de 0,05 - 6,0 % en poids,
**que** ledit tensioactif fluoré prévu au minimum est présent, dans l'encre, en une quantité de 0,05 - 6,0 % en poids,
**que** le solvant organique, prévu au minimum, est présent en une quantité de 60 - 90 % en poids,
et **que** l'agent de coloration, prévu au minimum, est présent en une quantité de 4,0 - 35,0 % en poids.

2. Utilisation d'une encre selon la revendication 1,
**caractérisée par le fait**
**que** ladite encre renferme, en tant qu'adjuvant, des liants, des substances antimoussage, des agents de lubrification, des huiles, des cires, des tensioactifs supplémentaires et/ou des additifs de types autres.
